# FASCICULE DE BREVET EUROPEEN

(11) **EP 2 373 440 B1**
(45) Date de publication et mention de la délivrance du brevet: **07.11.2012**
(21) Numéro de dépôt: 09803798.9
(22) Date de dépôt: 01.12.2009
(51) Int. Cl.: B21D 13/02, B21D 13/10, B01J 19/32, F25J 3/04, B21D 53/02, B21D 35/00, B21D 22/02

(54) **PROCEDE ET DISPOSITIF DE FABRICATION D ' UNE ONDE DE GARNISSAGE STRUCTURE**
VERFAHREN UND VORRICHTUNG ZUR HERSTELLUNG EINER STRUKTURIERTEN AUSKLEIDUNGSWELLE
METHOD AND DEVICE FOR MANUFACTURING A STRUCTURED LINING WAVE

(30) Priorité: 04.12.2008 FR 0858251
(43) Date de publication de la demande: 12.10.2011
(73) Titulaire: L'Air Liquide Société Anonyme pour l'Etude et l'Exploitation des Procédés Georges Claude, 75007 Paris (FR)
(72) Inventeur: GIANG, Son Ha, F-94370 Sucy- En-brie (FR)
(74) Mandataire: Mercey, Fiona Susan
(86) Numéro de dépôt international: PCT/FR2009/052356
(87) Numéro de publication internationale: WO 2010/063940

(56) Documents cités:
- EP-A- 0 270 050
- EP-A1- 0 750 940
- WO-A-89/10527
- WO-A-97/16247
- FR-A- 2 820 654
- US-A- 1 534 299
- US-A- 3 618 778
- US-A- 3 673 846
- US-A- 4 634 534
- US-A1- 2002 124 404
- US-A1- 2005 129 592

## Description

La présente invention est relative à un procédé de fabrication, à partir d'une bande de matière en feuille éventuellement perforée, d'une onde de garnissage structuré dont la surface générale est texturée mécaniquement et est générée sensiblement par balayage d'un profil répétitif parallèlement aux bords de la bande, suivant une ligne directrice ayant une orientation principale oblique par rapport aux bords de la bande et éventuellement non rectiligne sur au moins une partie de sa longueur.

Les garnissages ondulés-croisés sont utilisés dans divers appareils : mélangeurs pour une phase unique, dispositifs d'échange de chaleur et/ou de matière entre deux fluides. Une application particulière est la distillation, notamment la distillation d'air.

Ces garnissages sont constitués de modules ou « packs » dont chacun est formé d'un empilement de bandes ondulées en oblique, alternativement dans un sens et dans l'autre. Ces bandes peuvent être perforées ou non, et réalisées à partir de feuilles lisses ou texturées, généralement métalliques. Des exemples sont décrits dans le GB-A-1 004 046 et dans le CA-A-1 095 827.

Dans le cas des colonnes de distillation, les bandes sont contenues dans des plans généraux verticaux. Les modules sont généralement tournés de 90° autour de l'axe de la colonne d'un module au suivant.

Un procédé de fabrication décrit dans FR-A-2820654 utilise des réglettes pour plier et emboutir la bande de matière métallique en feuille éventuellement perforée, d'une onde de garnissage structuré.

Il est maintenant prévu d'utiliser une variante de ce procédé pour produire un garnissage dont la surface est texturée mécaniquement par exemple pour produire une surface gaufrée.

Les garnissages texturés mécaniquement sont connus d'US-A-4740334, US-A-4981621, EP-A-0190435, US-A-4604247, US-A-2004135270, EP-A-0807462 et US-A-4296050.

L'invention a pour but de permettre de réaliser industriellement de telles ondes de façon particulièrement économique et, plus généralement, de fabriquer industriellement des ondes texturées mécaniquement dont les génératrices ont des formes variées.

Une grande partie des coûts de garnissage est liée au prix de la matière première. Les matériaux de base utilisés sont l'aluminium, le cuivre et l'acier inoxydable. Ces matériaux métalliques deviennent de plus en plus coûteux au fil des années. Une solution simple est de diminuer l'épaisseur des garnissages. Afin de conserver une structure suffisamment rigide tout en diminuant l'épaisseur, on confère une texture à la surface la bande, par exemple en le gaufrant ce qui lui confère une meilleure inertie après pliage. La texturisation consiste à déformer la bande plane avec une multitude de bosses ou creux qui ne sont pas crevés. Ces bosses ou creux peuvent avoir différentes formes : pyramidales, coniques, hémi-sphériques ou cylindriques. Cette solution permet aussi de réaliser des garnissages à très faible densité (à hauteur d'onde plus élevée) tout en conservant les mêmes épaisseurs des bandes.
Le procédé de gaufrage peut être réalisé de deux façons différentes.

A cet effet, il est prévu un procédé de fabrication à partir d'une bande de matière en feuille éventuellement perforée, d'une onde de garnissage structuré, ayant des sommets et des vallées, dont la surface générale est générée sensiblement par balayage d'un profil répétitif parallèlement aux bords de la bande, suivant une ligne directrice ayant une orientation principale oblique par rapport aux bords de la bande et éventuellement non rectiligne sur au moins une partie de sa longueur, dans lequel on effectue un pliage-emboutissage de la bande par pas successifs, au moyen de deux réglettes opposées à mouvement relatif alternatif de rapprochement-éloignement, ces réglettes possédant des surfaces de section généralement sinusoïdale comprenant des surfaces actives courbes caractérisé en ce que les surfaces actives courbes sont reliées par des surfaces concaves, de sorte que quand les réglettes se rapprochent, elles rentrent en contact uniquement avec certaines parties de la bande, de préférence celles devant former les sommets et les vallées de l'onde, et en ce que on texturise la surface de la bande avant d'effectuer le pliage-emboutissage.

De préférence :
- les surfaces actives sont concaves ;
- au moins une des réglettes comprend au moins une surface texturée apte à conférer une texturisation à la bande ;
- on perfore la bande avant d'effectuer le pliage-emboutissage, et de préférence avant de texturer la surface, si ceci ne s'effectue pas en même temps que le pliage emboutissage ;
- l'onde est une onde de garnissage ondulé-croisé.

L'invention a également pour objet un dispositif de mise en oeuvre d'un tel procédé comprenant deux réglettes opposées de pliage-emboutissage dont les génératrices comportent éventuellement au moins une partie non rectiligne, des moyens pour animer ces réglettes d'un mouvement relatif alternatif de rapprochement-éloignement, et des moyens pour faire avancer une bande de matière en feuille par pas successifs entre les réglettes en position d'ouverture de celles-ci et des moyens de perforation de la bande et/ou des moyens de texturisation de surface situés en amont des réglettes.

Généralement les sommets ne sont pas complètement lisses, s'ils ont déjà été texturés, car il reste des marques de gaufrage.

De préférence, la partie à surface lisse de la lamelle (ou substantiellement lisses, par exemple à texturisation écrasée) représente entre 20 et 50% de la lamelle, le restant de 50% à 80% de la lamelle étant texturé.

De préférence la partie lisse est constituée par des bandes entourant les lignes de sommets et de la vallée de l'onde.

Des exemples de mise en oeuvre de l'invention vont maintenant être décrits en regard des dessins annexés, sur lesquels :
- la Figure 1 représente une onde réalisée conformément à l'invention vue de côté ;
- la Figure 2 représente en perspective une onde réalisée conformément à l'invention ;
- la Figure 3 représente une coupe des deux réglettes de pliage-emboutissage pour la fabrication de cette onde ;
- la Figure 4 est une vue en coupe de l'onde en cours de fabrication ;
- la Figure 5 représente schématiquement une autre variante du procédé de l'invention ;
- la Figure 6 représente en plus de détail les étapes du procédé de la Figure 5 ; et
- la Figure 7 représente schématiquement une partie d'une colonne de distillation d'air suivant l'invention.

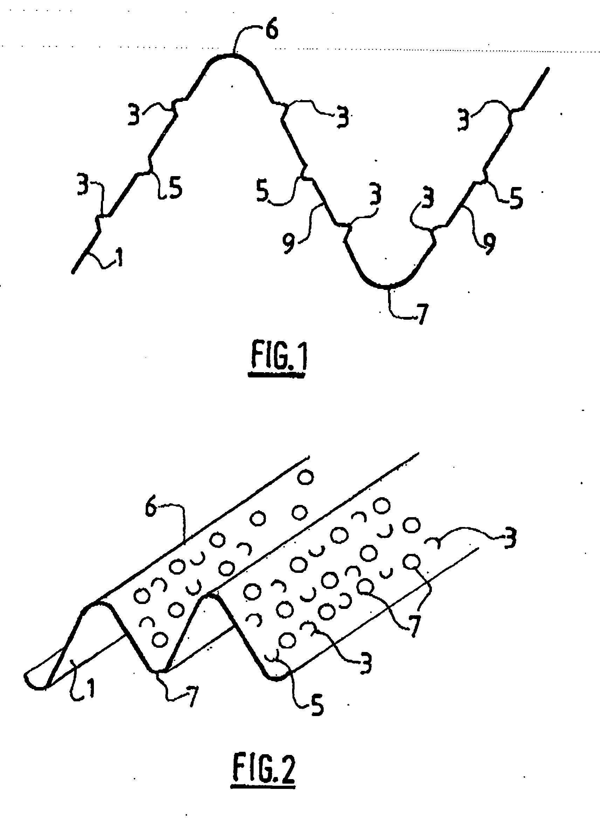

L'onde 1 représentée à la Figure 1, vu de côté, est une feuille métallique mince pliée pour former des ondulations régulières. Le profil répétitif de l'onde 1 est en zigzague à côtés 9 courbes, avec des sommets supérieurs 6 et inférieurs 7 de rayon aussi petit que possible.

Des bosses 3 et des creux 5 sont formés au moins dans les côtés de l'onde, la forme des bosses et des creux étant identique de sorte qu'une bosse 3 vue d'une côté de la bande devient un creux quand vue de l'autre côté de la bande.

L'onde 1 est réalisée à partir d'une bande métallique mince plane par simple pliage-emboutissage au moyen d'un dispositif A qui comprend deux réglettes opposées, inférieure 11 et supérieure 12, à mouvement relatif alternatif de rapprochement-éloignement.

Chaque réglette comporte en direction de l'autre réglette deux dents, respectivement 13-14 et 15-16, toutes les dents ayant la même hauteur. Les dents sont reliées par des surfaces concaves et sont disposées de façon à s'interpénétrer.

Le garnissage peut être texturisé sur toute sa surface sinon il peut y avoir une texturisation seulement sur certaines parties de la surface, par exemple uniquement sur les flancs de l'onde. Pour ce deuxième cas, on réalise d'abord une texturisation, par exemple un gaufrage sur la surface entière de la bande, puis cette bande plane est pliée et emboutie à l'aide d'une règle inférieure et d'une règle supérieure de forme. Au niveau des sommets et vallées, la texturisation est réduite voire éliminée par exemple dans le cas d'un « gaufrage » les pointes ou creux sont écrasés lors du pliage-emboutissage de l'onde.
Cette texturisation dans laquelle les sommets de l'onde ne sont pas texturisés permet d'avoir un contact régulier et constant entre bandes. Ceci amène une distribution liquide plus régulière et homogène.

Ne pas avoir cette « rugosité » au niveau des plis de sommet permet au liquide de ne pas être trop perturbé au niveau des crêtes de l'ondulé croisé : ceci limiterait les risque d'arrachage ou encore d'entraînement de gouttelettes par le gaz qui le lèche à contre courant.

De plus éviter cette texturation au niveau des creux évite une accumulation excessive le liquide aux zones « mortes » c'est-à-dire là où il y a peu de contact avec le gaz (phénomène de capillarité).

Une amélioration possible de l'invention concerne l'orientation et l'arrangement de cette texturation sur la tôle. Il est connu que l'écoulement naturel d'un liquide sur une tôle s'effectue suivant la ligne de plus grande pente (décrit dans WO-A-0304148). Voulant créer des perturbations du film liquide s'écoulant sur la tôle, il est intéressant de pouvoir arranger/ aligner ces déformations locales de la tôle d'une manière judicieuse à savoir :
- lorsqu'il s'agit de cannelures, avoir des lignes perpendiculaires à la ligne de plus grande pente ;
- lorsqu'il s'agit de déformations locales (bosses....) celles-ci doivent avoir un arrangement tel qu'il existe un alignement perpendiculaire à la ligne de plus grande pente.

Le taux d'occupation de la texturisation se situe de 5 à 30% de la surface totale de la bande plane.

La hauteur des bosses ou des creux du gaufrage varie de 0.3 à 1.5mm, pour des ondulations ayant une hauteur de 3mm à 12 mm.

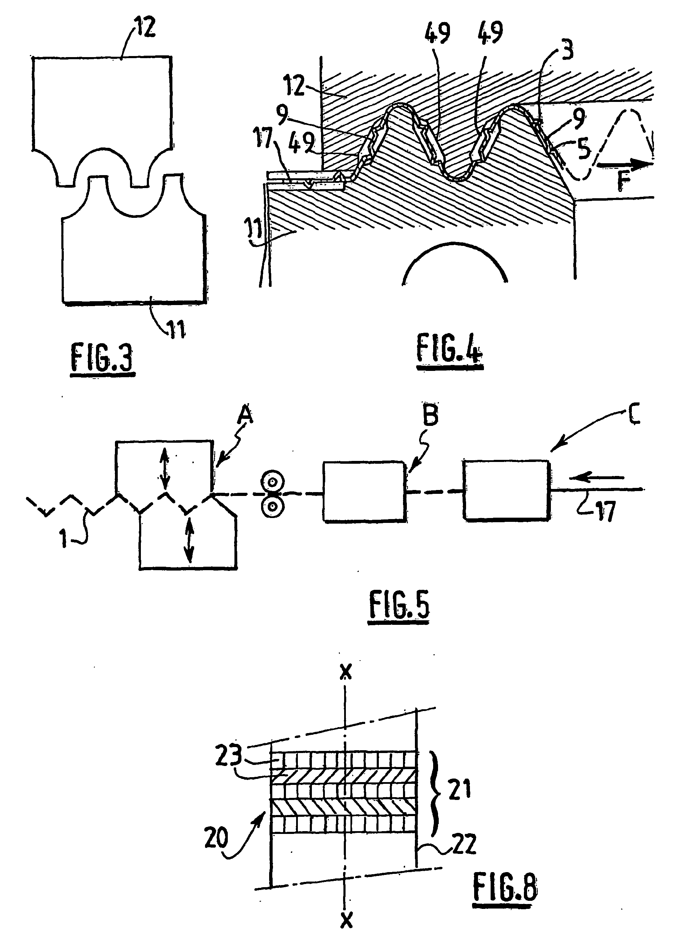

La Figure 3 illustre les sections des réglettes 11,12 de l'appareil de pliage-emboutissage. Contrairement à celles de l'art antérieur, celles-ci n'ont pas de bords rectilignes, mais ont chacun un bord de section au moins substantiellement sinusoïdale dont les dents s'interpénètrent.

Comme schématisé sur la Figure 4, la bande 17 de départ déjà gaufrée est avancée par pas suivant la flèche F, parallèlement à ces bords, au moyen d'un mécanisme d'avancement, pendant que les réglettes sont écartées l'une de l'autre, le pas d'avance étant égal au pas de l'ondulation. Après chaque avance, les réglettes sont rapprochées l'une de l'autre et déforment le métal, lequel n'emplit pas la totalité de l'espace qui sépare les réglettes, puisque le métal devant former les côtés de l'onde se trouve séparé des dents par les concavités 49. Seuls les sommets de l'onde sont en contact avec les dents.

Ainsi, la texturation des sommets est écrasée par les dents. Alternativement on peut s'assurer que le gaufrage est fait de sorte que les zones de métal devant former les sommets ne sont pas gaufrés.

Comme connu en soi, la bande 17 peut être perforée avant son pliage, soit dans un poste de perforation séparé situé en amont du dispositif A, soit au sein même de ce dispositif.

L'onde 1 peut posséder alors une hauteur légèrement réduite près de ses bords, ce qui ne présente pas d'inconvénient particulier pour les modules de garnissage résultants. Selon l'invention, on réalise avec un seul outil le pliage-formage emboutissage après poinçonnage. Figure 5. Dans ce cas, l'outil de pliage formage emboutissage comportera des bosses et creux sur les flans du profil.

La fabrication de l'onde est ainsi réalisée rapidement, économiquement et de façon fiable avec ce type de réglettes.

La variante de la Figure 5 illustre le cas dans lequel la texturisation de la structure est effectuée en amont du pliage.

Pour cela, on prévoit un poste B de texturisation de la surface de la bande du métal en amont du poste A de pliage-emboutissage. Cette variante peut s'appliquer plus particulièrement aux ondes perforées. Dans ce cas, comme illustré, le poste B se trouve entre un poste C de perforation et le poste A de pliage-emboutissage. Un poste de recuit de métal (non-illustré) peut se trouver entre les postes B et C ou entre les postes A et B.

Comme on le comprend, l'invention permet de réaliser des ondes ayant des ondulations de formes très variées à partir de feuilles gaufrées, ce qui permet d'améliorer les propriétés des garnissages ondulés-croisés résultants.

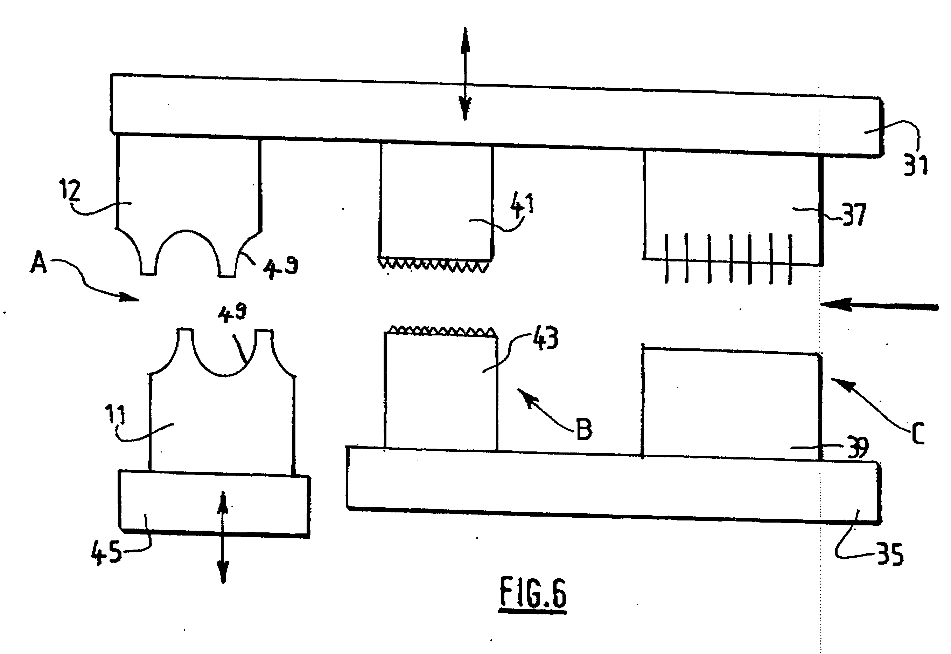

La Figure 6 montre le poste de perforation C ayant des aiguilles pour percer les perforations, le poste de gaufrage B et le poste de pliage-emboutissage.

Comme schématisé sur la Figure 6, il y a une deuxième façon de former les ondes gaufrées. Ici la bande 17 de départ non gaufrée est avancée par pas suivant la flèche F, parallèlement à ces bords, au moyen d'un mécanisme d'avancement, pendant que les réglettes 11,12 sont écartées l'une de l'autre, le pas d'avance étant égal au pas de l'ondulation. Après chaque avance, les réglettes sont rapprochées l'une de l'autre et déforment le métal. Les premières dents comprennent des ouvertures (non illustrées), dans lesquelles le métal est forcé par le mouvement de la presse, afin de former les bosses et les creux du gaufrage. Au moins une dent supérieure ou inférieure de la réglette doit avoir des ouvertures mais de préférence les dents supérieures et inférieures en comprennent. Les deuxièmes dents sont formées comme celles de la Figures 4 avec des concavités 49. Ainsi le métal de la bande n'emplit pas la totalité de l'espace qui sépare les réglettes, puisque le métal devant former les côtés de l'onde se trouve séparé des dents par les concavités 49. Seuls les sommets de l'onde sont en contact avec les dents.

Une amélioration possible de l'invention concerne l'orientation/l'arrangement de cette texturation sur la tôle. Il est connu que l'écoulement naturel d'un liquide sur une tôle s'effectue suivant la ligne de plus grande pente (décrit dans WO-A-0304148). Voulant créer des perturbations du film liquide s'écoulant sur la tôle, il est intéressant de pouvoir arranger/ aligner ces déformations locales de la tôle d'une manière judicieuse à savoir :
- lorsqu'il s'agit de cannelures, avoir des lignes perpendiculaires à la ligne de plus grande pente ;
- lorsqu'il s'agit de déformations locales (par exemple, des bosses) celles-ci doivent avoir un arrangement tel qu'il existe un alignement perpendiculaire à la ligne de plus grande pente.

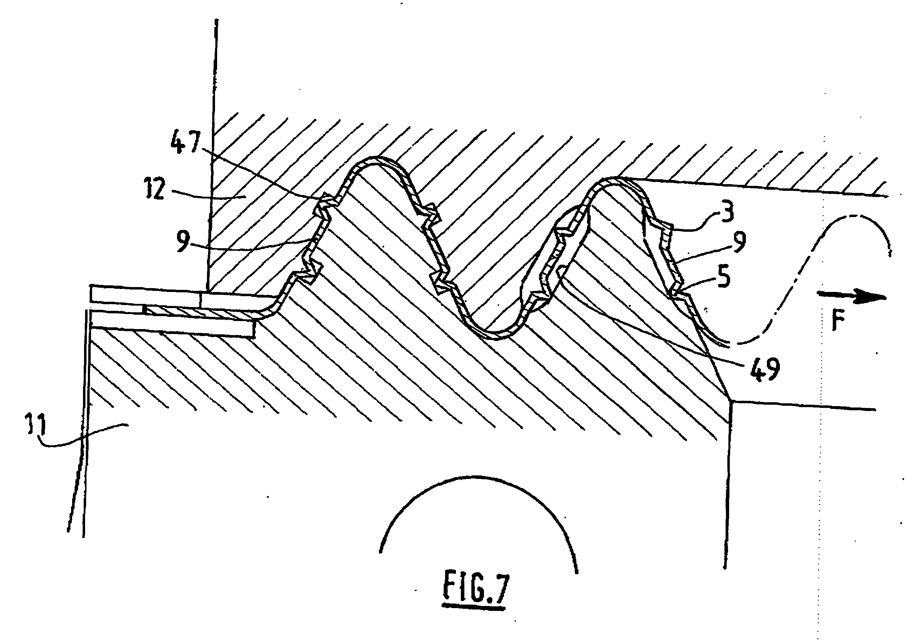

On a représenté sur la Figure 7 une partie d'une colonne de distillation d'air 20, comprenant un tronçon de distillation 21 disposé dans la virole cylindrique 22 de la colonne. Le tronçon 21 est constitué par un garnissage ondulé-croisé lui-même formé d'un empilement de modules de garnissage 23. Chaque module 23 est constitué d'un empilement d'ondes 1, situées chacune dans un plan général vertical, coupées à longueur à partir de la bande 17 pliée et dont les directions générales d'ondulation sont inversées d'une onde à l'autre, les bords étant disposés horizontalement. Chaque module 22 est tourné de 90° par rapport au module suivant autour de l'axe vertical X-X de la colonne.

## Revendications

1. Procédé de fabrication, à partir d'une bande de matière en feuille (17) éventuellement perforée, d'une onde (1) de garnissage structuré, ayant des sommets et des ondes, dont la surface générale est générée sensiblement par balayage d'un profil répétitif parallèlement aux bords de la bande, suivant une ligne directrice ayant une orientation principale oblique par rapport aux bords de la bande et éventuellement non rectiligne sur au moins une partie de sa longueur, dans lequel on effectue un pliage-emboutissage de la bande par pas successifs, au moyen de deux réglettes opposées (11, 12) à mouvement relatif alternatif de rapprochement-éloignement, ces réglettes possédant des surfaces de section généralement sinusoïdale comprenant des surfaces actives courbes **caractérisé en ce que** les surfaces actives courbes sont reliées par des surfaces concaves (49), de sorte que quand les réglettes se rapprochent, elles rentrent en contact uniquement avec certaines parties de la bande, de préférence celles devant former les sommets et les vallées de l'onde, et **en ce que** l'on texturise la surface de la bande (17) avant d'effectuer le pliage-emboutissage.

2. Procédé selon la revendication 1 dans lequel les surfaces actives sont concaves.

3. Procédé selon l'une des revendications 1 ou 2 dans lequel au moins une des réglettes (11,12) comprend au moins une surface texturée apte à conférer une texturisation à la bande (17).

4. Procédé suivant l'une des revendications précédentes, **caractérisé en ce qu'**on perfore la bande (17) avant d'effectuer le pliage-emboutissage, et de préférence avant de texturiser la surface, si ceci ne s'effectue pas en même temps que le pliage emboutissage.

5. Procédé suivant l'une quelconque des revendications 1 à 4, **caractérisé en ce que** l'onde (1) est une onde de garnissage ondulé-croisé.

6. Dispositif de mise en oeuvre du procédé suivant l'une quelconque des revendications 1 à 5, comprenant deux réglettes opposées (11, 12) de pliage-emboutissage dont les génératrices comportent éventuellement au moins une partie non rectiligne, des moyens pour animer ces réglettes d'un mouvement relatif alternatif de rapprochement-éloignement, et des moyens pour faire avancer une bande de matière en feuille par pas successifs entre les réglettes en position d'ouverture de celles-ci **caractérisé en ce qu'**il comporte des moyens (C) de perforation de la bande et/ou des moyens (B) de texturisation de surface situés en amont des réglettes (11, 12).

## Claims

1. Method for manufacturing, from a strip of sheet material (17) which is optionally perforated, a structured packing corrugation (1) having peaks and corrugations, the general surface of which is generated substantially by sweeping a repeated profile parallel to the edges of the strip, following a guiding line which has an oblique principal orientation with respect to the edges of the strip and optionally rectilinear over at least a portion of the length thereof, the strip being folded and pressed in successive steps by means of two opposing dies (11, 12) that move alternately towards and away from each other, these dies having surfaces with a generally sinusoidal cross section comprising curved active surfaces, **characterised in that** the curved active surfaces are linked by concave surfaces (49) in such a way that, when the dies move towards each other, they come into contact with certain portions of the strip only, preferably the portions which are to form the peaks and troughs of the corrugation, and **in that** the surface of the strip (17) is textured before the folding and pressing is carried out.

2. Method according to claim 1, in which the active surfaces are concave.

3. Method according to either claim 1 or claim 2, in which at least one of the dies (11, 12) comprises at least one textured surface capable of texturing the strip (17).

4. Method according to any of the preceding claims, **characterised in that** the strip (17) is perforated before the folding and pressing are carried out, and preferably before the surface is textured, if this is not carried out at the same time as the folding and pressing.

5. Method according to any of claims 1 to 4, **characterised in that** the corrugation (1) is a cross-corrugated packing corrugation.

6. Device for implementing the method according to any of claims 1 to 5, comprising two opposing folding and pressing dies (11, 12) of which the generators optionally have at least one non-rectilinear portion, means for urging these dies to effect an alternating relative movement towards and away from each other, and means for making a strip of sheet material advance in successive steps between the dies when the dies are in an open position, **characterised in that** said device comprises means (C) for perforating the strip and/or surface-texturing means (B) located upstream of the dies (11, 12).

## Patentansprüche

1. Verfahren zur Herstellung einer Auskleidungswelle (1), mit Spitzen und Wellen, aus einem gegebenenfalls perforierten blattförmigen Band (17), deren allgemeine Oberfläche im Wesentlichen durch Abtasten eines sich wiederholenden Profils parallel zu den Rändern des Bandes, entlang einer Leitlinie, die eine Hauptausrichtung schräg zu den Rändern des Bandes hat und gegebenenfalls auf mindestens einem Teil ihrer Länge nicht gerade ist, erzeugt wird, bei dem ein Falzen-Ziehen des Bandes in aufeinander folgenden Schritten mit Hilfe von zwei gegenüberliegenden Stegen (11, 12) mit einer relativen Wechselbewegung der Annäherung-Entfernung durchgeführt wird, wobei diese Stege Oberflächen mit im Allgemeinem sinusförmigem Querschnitt umfassen, die aktive gekrümmte Oberflächen umfassen, **dadurch gekennzeichnet, dass** die aktiven gekrümmten Oberflächen durch konkave Oberflächen (49) verbunden sind, derart, dass, wenn die Stege sich einander annähern, sie einzig mit bestimmten Teilen des Bandes in Kontakt kommen, vorzugsweise diejenigen, welche die Spitzen und Täler der Welle bilden sollen, und dass die Oberfläche des Bandes (17) vor dem Falzen-Ziehen texturiert wird.

2. Verfahren nach Anspruch 1, wobei die aktiven Oberflächen konkav sind.

3. Verfahren nach einem der Ansprüche 1 oder 2, wobei mindestens eine der Stege (11, 12) mindestens eine texturierte Oberfläche umfasst, die dafür geeignet ist, dem Band (17) eine Texturierung zu verleihen.

4. Verfahren nach einem der vorhergehenden Ansprüche, **dadurch gekennzeichnet, dass** das Band (17) vor dem Falzen-Ziehen, und vorzugsweise vor dem Texturieren der Oberfläche, sofern dieses nicht zur gleichen Zeit wie das Falzen-Ziehen erfolgt, perforiert wird.

5. Verfahren nach einem der Ansprüche 1 bis 4, **dadurch gekennzeichnet, dass** die Welle (1) eine Kreuzweise gewellte Auskleidungswelle ist.

6. Vorrichtung zur Ausführung des Verfahrens nach einem der Ansprüche 1 bis 5, umfassend zwei gegenüberliegende Stege (11, 12) zum Falzen-Ziehen, deren Mantellinien gegebenenfalls mindestens einen nicht geraden Teil, Mittel, um diese Stege in einer relativen Wechselbewegung der Annäherung-Entfernung anzutreiben, und Mittel, um ein blattförmiges Band in aufeinander folgenden Schritten zwischen die Stege in Öffnungsposition derselben vorzuschieben, aufweisen, **dadurch gekennzeichnet, dass** sie Mittel (C) zum Perforieren des Bandes und/oder Mittel (B) zum Texturieren der Oberfläche aufweist, die stromaufwärts zu den Stege (11, 12) angeordnet sind.
